Europäisches Patentamt

European Patent Office

Office européen des brevets

(11) Publication number: **0 232 016**
**A2**

(12) **EUROPEAN PATENT APPLICATION**

(21) Application number: **87300215.8**

(51) Int. Cl.⁴: **C 09 D 3/80**

(22) Date of filing: **12.01.87**

(30) Priority: **29.01.86 GB 8602195**
**09.05.86 GB 8611421**
**13.06.86 GB 8614406**
**12.11.86 GB 8627010**

(43) Date of publication of application:
**12.08.87 Bulletin 87/33**

(84) Designated Contracting States:
**AT BE CH DE ES FR GB GR IT LI LU NL SE**

(71) Applicant: **IMPERIAL CHEMICAL INDUSTRIES PLC**
**Imperial Chemical House Millbank**
**London SW1P 3JF (GB)**

(72) Inventor: **Padget, John Christopher**
**21 Ennerdale Drive**
**Frodsham Cheshire WA6 7LF (GB)**

**Yeates, Stephen George**
**53 St. Austelle Avenue**
**Broken Cross Macclesfield Cheshire (GB)**

(74) Representative: **Sheller, Alan et al**
**Imperial Chemical Industries PLC Legal Department:**
**Patents PO Box 6**
**Welwyn Garden City Herts, AL7 1HD (GB)**

(54) Curable coating compositions and their preparation and use.

(57) Film-forming radiation-curable aqueous based coating composition comprising an aqueous latex of a film-forming copolymer preferably having residual unsaturation for cross-linking purposes, preferably a multi-functional cross-linking material and optionally a photoinitiator, wherein the copolymer has a gel fraction of at least 1% by weight which has been formed by the early addition of a multi-functional comonomer in the copolymerisation, with a low reactivity multi-functional comonomer preferably being added late in the copolymerisation so as to provide the preferred residual unsaturation.

EP 0 232 016 A2

**Description**

## CURABLE COATING COMPOSITIONS AND THEIR PREPARATION AND USE

The present invention relates to radiation-curable coating compositions and to a process for their preparation.

It is known to produce aqueous-based radiation (usually ultra-violet) -curable coating compositions by forming an aqueous latex of a film-forming copolymer using an aqueous emulsion polymerisation process which employs a monomer system that includes a multi-functional comonomer for providing residual ethylenic double bonds in the resulting polymer: the aqueous latex is subsequently formulated with a multi-functional cross-linking material (e.g. a multi-functional oligomer or monomer) and an ultra-violet photoinitiator or sensitizer. On exposure to ultra-violet radiation after a film has been formed (by removal of the aqueous phase). the photoinitiator initiates a cross-linking reaction between the cross-linking material and the residual double bonds in the polymer. Such compositions are of utility because the resulting cured films. which have desirable advantages such as very good blocking resistance and improved solvent resistance, may be formed very rapidly from the uncured films obtained on removal of water and without the need to employ an elevated temperature (ambient temperature often being suitable). Examples of such curable compositions and their preparation are disclosed in US Patent 4107013 and Polymer Paint Colour Journal, 175, 254 (1985) and the paper by Dr J-M Loutz et al in the Xth Internation Conference on Organic Coatings Science and Technology (Athens, 1984).

We have now discovered how to prepare further improved aqueous-based radiation-curable coating compositions. Such compositions are particularly advantageous when the film-forming copolymer of the aqueous latex is a chlorine-containing copolymer.

According to the present invention there is provided an aqueous-based film-forming, radiation-cross-linkable coating composition comprising an aqueous latex of at least one film-forming copolymer formed by addition polymerisation, wherein said film-forming copolymer has a gel fraction of at least 10% by weight which has been formed from the monomer system used to prepare said film-forming copolymer as a result of the inclusion therein of at least one multi-functional comonomer which has been added to the polymerisation reaction in at least an early part thereof, and wherein said composition either

(a) includes at least one multi-functional cross-linking material, or

(b) excludes any multi-functional cross-linking material provided it is a composition in which at least one of said at least one film-forming copolymer is cross-linkable (that is, has unsaturated, i.e. ethylenic, carbon-carbon double bonds therein for cross-linking purposes) as a result of said monomer system including at least one "lower reactivity" multi-functional comonomer (as defined hereafter) which has been added to the polymerisation reaction in at least a late part thereof.

In the composition of the invention it is preferred that the at least one film-forming copolymer employed is cross-linkable (by having residual carbon-carbon double bonds unsaturation) in both alternatives (a) and (b). although of course this is optional in (a) where the composition includes a multi-functional cross-linking material but is essential in (b) where such a multi-functional cross-linking material is absent.

The gel fraction is usually within the range 1 to 99% by weight, more preferably 20 to 90% by weight, and particularly 40 to 80% by weight.

The radiation usable for cross-linking the composition may be provided by any suitable type of energy. but is usually ultra-violet radiation or electron beam radiation (the latter being particularly useful in respect of embodiment (b) and also in that the composition can include pigment without affecting cross-linking efficiency to any extent). When cross-linking is to be effected by ultra-violet radiation energy, the composition will usually contain at least one photoinitiator (or sensitizer), although some compositions to be cross-linked using ultra-violet radiation may not require the presence of photoinitiator, particularly compositions in which the film-forming, preferably cross-linkable copolymer is a chlorine-containing copolymer (although photoinitiator can be included if desired). When cross-linking is to be effected by electron beam radiation, photoinitiator (sensitizer) is not required.

There is also provided according to the present invention a process for the preparation of an aqueous-based film-forming radiation-cross-linkable coating composition as defined above, which process comprises:

1) forming an aqueous latex of at least one film-forming, preferably cross-linkable copolymer made by addition polymerisation using a monomer system which yields a film-forming copolymer and includes at least one multi-functional comonomer which is added to the polymerisation reaction in at least an early part thereof thereby providing in the resulting copolymer a gel fraction having a proportion by weight of the copolymer as defined above and preferably which also includes at least one "lower reactivity" multi-functional comonomer (as defined hereinafter) which is added in at least a late part of the polymerisation reaction thereby providing in the resulting copolymer residual unsaturated carbon-carbon double bonds which impart cross-linkability thereto: and

2) admixing said aqueous latex with at least one multi-functional cross-linking material this admixture being optional if said film-forming copolymer is cross-linkable by virtue of residual carbon-carbon double bond unsaturation therein. and. if required (i.e. optionally), at least one photoinitiator.

By the term "multi-functional" in respect of said multi-functional comonomer or said multi-functional cross-linking material is meant a comonomer or material having at least two unsaturated carbon-carbon double bonds which can each (i.e. separately) take part in a free-radical initiated addition copolymerisation reaction.

It is evident that by the term "monomer system" is meant a system which in terms of the nature of the comonomers therein and their mode of incorporation into the copolymer (quantity and/or timing of addition to the polymerisation medium) yields the copolymer as defined above (i.e. film-forming, with a gel fraction of at least 1%, and, preferably, cross-linkable by virtue of residual i.e. free, carbon-carbon unsaturated double bonds) and which therefore includes

i) at least one comonomer which will provide the basis of the film-formability of the resulting copolymer, and

ii) at least one multi-functional comonomer which in terms of its (or their) nature and/or mode of incorporation into the copolymer yields a copolymer having:

- a gel fraction as defined above (by virtue of cross-linking during the polymerisation);

- preferably in alternative (a) and essentially in alternative (b), residual carbon-carbon double bond unsaturation which renders the resulting copolymer cross-linkable.

To achieve such preferred residual unsaturation (for cross-linking purposes) a multi-functional comonomer used (as defined) in the copolymerisation should have at least one of its carbon-carbon double bonds (in a molecule thereof) of a reactivity such that it or they react(s) in the copolymerisation at a significantly slower rate than does the unsaturated bond(s) of the comonomer(s) providing the main film-forming basis of the resulting copolymer (the "film-forming" comonomer(s)). (Such a multi-functional comonomer is herein termed a "lower reactivity" multi-functional comonomer for convenience). This does not preclude two or more (or all) of the unsaturated double bonds of a lower reactivity multi-functional comonomer being less reactive in this way. Preferably, the "lower reactivity" multi-functional comonomer (if used) contains one or more allyl groups $CH_2=CHCH_2-$ (or, possibly, monosubstituted allyl groups $RCH=CHCH_2-$ where R is an appropriate substituent such as a lower (Cl to C4) alkyl groups, e.g. methyl or ethyl since the double bond of such groups is of low reactivity and generally speaking slower reacting than the unsaturated bonds of most film-forming comonomers.

By the "gel fraction" of the copolymer is meant the percentage (by weight) of cross-linked material in the copolymer; this is usually determinable by extraction using a solvent and conditions which dissolves the corresponding uncross-linked fraction of the copolymer (found e.g. with the aid of a similar copolymer that is known to have been prepared without any possibility for cross-linking) and measuring the weight of the insoluble portion of the copolymer.

To achieve a gel content (as defined) a multi-functional comonomer used in the copolymerisation need not - although it can if desired - have at least one of its carbon-carbon double bonds (in the molecule) of significantly lower reactivity than the carbon-carbon double bond(s) of the film-forming comonomer(s) (i.e. it need not be a lower reactivity multi-functional comonomer-although it can be if desired). Thus e.g., it can if desired (although it is not essential) have each double bond bond with the same order of (or even greater) reactivity as the double bond(s) of the film-forming comonomer(s). (Such a multi-functional comonomer is termed hereafter a "higher reactivity" multi-functional comonomer for convenience).

Hence the same (i.e. a single) multi-functional comonomer in the copolymerisation could be used to provide the gel content (as defined) and the preferred residual unsaturation provided it is a "lower reactivity" type (as discussed above); alternatively there could be used two or more of this type of comonomer, or two or more comonomers at least one of which is the "higher reactivity" type and at least one of which is the "lower reactivity" type (as discussed above). Where residual ethylenic unsaturation in the resulting copolymer is required (as is preferable in alternative (a) and essential in alternative (b)), there could not be solely used one or more multi-functional comonomers of the "higher reactivity" type as this would not result in appropriate residual unsaturation.

The multi-functional comonomer or comonomers should be added ( as defined herebefore) in the copolymerisation to achieve the required gel fraction and the preferred residual unsaturation of the resulting copolymer.

In order to provide a gel fraction (as hereinbefore defined) in the film-forming copolymer according to the invention, at least one multi-functional comonomer (which, as mentioned before, can be one or more comonomers of the lower reactivity type, or one or more comonomers of the higher reactivity type, or a mixture of one or more higher reactivity comonomers and one or more lower reactivity comonomers) must be added to the copolymerisation reaction in at least an early part thereof; usually, said at least one multi-functional comonomer, at least in part. is added within (i.e. has been added by the end of) the first 70% conversion of monomers to copolymer reached in the copolymerisation (preferably by the end of 60% conversion. often by the end of 50% conversion or by the end of the first 40% conversion reached). This is in order to allow enough of both carbon-carbon double bonds in each molecule to react to yield the required gel fraction. This may be achieved e.g. by the comonomer being fed continuously to the reaction over a large conversion range which includes the early part of the copolymerisation, e.g. by being fed continuously over the conversion range 0 to 95% (or 0 to 90%). Alternatively. at least part of the multi-functional comonomer(s) could be added in one or in a relatively few portions within or during an early part of the copolymerisation, say before the end of the first 70% conversion (or before 60% or 50% conversion). The amount of multi-functional comonomer added in this early part of the copolymerisation is usually at least 5 weight % (preferably 5 to 50 weight % and particulary 5 to 20 weight %) of the total amount of multi-functional comonomer(s) used in the copolymerisation, and the remaining part of the multi-functional comonomer(s) whether it be the same as (particularly in cases where the early fed multi-functional comonomer is of the lower reactivity type) or different chemically to that added initially. added in a later part of the copolymerisation, preferably after at least 70% conversion in the copolymerisation has been reached.

To achieve residual unsaturation in the resulting copolymer (for cross-linking purposes) according to the invention as is preferred in (a) and essential in (b), at least one lower reactivity multi-functional comonomer must be added to the copolymerisation reaction in at least a late part thereof; usually said at least one lower reactivity multi-functional comonomer is added at least in part to the copolymerisation reaction after at least 70% conversion has been reached (preferably within 70 to 95%. more preferably 70 to 90% conversion). Preferably. at least 20 weight % of any lower reactivity multi-functional comonomer used in the copolymerisation. more preferably at least 50 weight % (particularly 50 to 95 weight %), is added in this later part of the copolymerisation reaction.

The 'early' and 'late' parts of the copolymerisation (in which multi-functional comonomer is added) can correspond to distinct parts of the copolymerisation reaction in terms of the conversion, i.e. the two periods could follow consecutively (as e.g. when a single multi-functional comonomer is continuously fed throughout most of copolymerisation, e.g. over 0 to 90% conversion) or be separated by a gap in conversion (in which no multi-functional comonomer is added) - although the two periods could overlap, particularly where at least one lower reactivity and at least one higher reactivity multi-functional comonomers are being used. Preferably, however, the two periods are separated by a conversion gap. We have found that such a procedure gives rise to more reproducible subsequent radiation cross-linking behaviour and hence more reproducible physical properties of the subsequently radiation cross-linked film. We have found that in practice the most reproducible system is achieved when the 'early' added multi-functional comonomer gives rise to gel but no residual carbon-carbon double bond saturation, and the 'late' added multi-functional comonomer gives rise to residual unsaturation but no gel formation during the polymerisation. The feeding profiles necessary to achieve these conditions are readily determined by experiment. The presence of a gap between the early and late additions of comonomer assists in achieving this distinction between gel formation and formation of residual unsaturation in the early and late parts of the the copolymerisation, and hence assists in achieving the desired reproducibility.

We have thus discovered that the presence of a certain amount (and in some case even a very large amount) of gel (i.e. cross-linked product) in the resulting copolymer (as defined) surprisingly does not affect the effective coalescence of the copolymer particles when a film is formed from the latex composition of the invention by removal of water (generally, the presence of gel would be expected to cause impaired coalescence, which would generally lead to impaired film properties). Indeed, a coating composition from embodiment (a) according to the invention containing an amount of gel (as defined) will, e.g., provide a cross-linked film with equivalent and often better properties using a much lower amount of multi-functional cross-linking material in comparison to a cross-linked film made from a similar composition in which the copolymer is gel-free and which contains a greater quantity of the multi-functional cross-linking material.

While the presence of a certain amount of gel is found in some of the cross-linkable film-forming copolymers disclosed in the Loutz et al paper (mentioned before), the surprising utility of this is nowhere mentioned in the paper, and the method of incorporating the multi-functional (diacrylate) comonomer described in the paper, wherein a diacrylate is added late on in the copolymerisation (to form a shell-type structure) clearly results in a highly inconsistent and uncontrolled gel formation (compare Tables I and 2 where the cross-linkable film-forming copolymers mentioned have highly variable amounts of gel, with the copolymers of Table 2 having very little or no gel content). Moreover, we have found that the incorporation of gel into the shell region leads to impaired coalescence and film formation of the resulting coating composition. By contrast, the copolymers of the present invention, in which the multi-functional comonomer(s) are incorporated as defined, have well defined and readily controllable gel contents.

As discussed above the multi-functional comonomer(s) may be added as defined to the polymerisation medium either in one portion or in a series of separate portions or by means of a continuous feed of the comonomer. If one or more of the other comonomers (i.e. non-multi-functional and usually film-forming comonomers) is being fed to the polymerisation medium, the multi-functional comonomer may conveniently be fed together with or at the same time as this other comonomer(s).

Examples of suitable multi-functional comonomers for use in the invention include lower reactivity types such as diallyl esters of aromatic diols such as diallyl phthalate and mono- and diallyl esters of alpha, beta-unsaturated mono-and dicarboxylic acids, such as allyl methacrylate, allyl acrylate, diallyl maleate, diallyl fumarate, and diallyl itaconate, and higher reactivity types such as I,3-butylene glycol dimethacrylate, ethylene glycol diacrylate, ethylene glycol dimethacrylate, and divinyl benzene. Our preferred multi-functional comonomers at the present time are diallyl phthalate and allyl methacrylate which can each be used as the sole multi-functional comonomer in the copolymerisation (to achieve both gel and the preferred residual unsaturation).

The copolymer of the invention in alternative (a) preferably contains 0.2 to 20% by weight of polymerised units derived from multi-functional comonmer (the small preferred lower limit being applicable because it is only optional, albeit preferable. for the film-forming copolymer to be cross-linkable in this alternative). In embodiment (b), the copolymer preferably contains I to 20% by weight of polymerised units of multi-functional comonomer; this range is also more preferred in alternative (a). Still more preferably, the copolymer in both alternatives (a) and (b) contains 2 to 10% by weight, and particularly 3 to 8% by weight of polymerised units derived from multi-functional comonomer.

The subsequently-added multi-functional cross-linking material(s) used in alternative (a) of the composition of the invention may be polymeric, oligomeric or monomeric in nature but is preferably a monomeric material. It may e.g. be di-, tri-, or tetra-functional (i.e. have 2, 3 or 4 olefinically unsaturated carbon-carbon double bonds). Suitable examples of multi-functional cross-linking materials for use in the composition of the invention include trimethylol propane triacrylate, 1,3-butylene glycol dimethacrylate, ethylene glycol diacrylate, ethylene glycol dimethacrylate, Bisphenol-A-dimethacrylate, diethylene glycol dimethacrylate, pentaerythritol triacrylate, pentaerythritol tetraacrylate, triethylene glycol dimethacrylate, trimethylene glycol dimethacrylate, trimethylol propane triacrylate, triethoxylated trimethylol propane triacrylate, tetraethylene glycol diacrylate, ethoxylated Bisphenol-A-dimethacrylate, pentaerythritol tetramethacrylate, allyl acrylate; allyl crotonate, allyl methacrylate, diallyl acrylate, diallyl fumarate, diallyl malate, diallyl maleate, diallyl phthalate, diallyl-oxyethyl methacrylate, melamine acrylate, triallyl-5-triazine, vinyl trialloxy silane, triallyl cyanurate, 1,6-hexanediol diacrylate, divinyl benzene, diallyl amine, trimethylol propane dimethyl ether, and diallyl maleate methacrylate. (It will be noted that the multi-functional comonomer used in polymerisation and the multi-functional cross-linking material used in the composition may in principle be the same substance; more usually, however, they are different).

The composition of the invention (alternative (a)) preferably contains up to 35% by weight, based on the weight (dry) of the copolymer in the composition, of said at least one multi-functional cross-linking material. More preferably it contains 2 to 30% by weight, and particularly 5 to 20% by weight.

The film-forming copolymer of the coating composition, once formed, need not have residual carbon-carbon (ethylenic) unsaturation which renders it capable of subsequent cross-linking if the composition includes a multi-functional cross-linking material. In such cases (alternative (a)) the multi-functional cross-linking material in the composition will itself (after film-formation) yield a cross-linked (cured) polymer to provide an intimate blend in which the cross-linked polymer molecules (from the multi-functional material) are intimately associated with the partially cross-linked molecules of the film-forming copolymer. This intimate blend can be one or (much more likely) two phase in morphology. This provides a coating which nevertheless has upgraded properties in its own right. More preferably in alternative (a), however, the film-forming copolymer of the coating composition does have residual unsaturation after its formation which renders it capable of subsequently cross-linking. In such cases, the double bonds of the multi-functional material take part in cross-linking with the film-forming copolymer (although of course some cross-linked polymer from the cross-linking material alone might possibly still be found as well).

It is also possible (as defined by alternative (b) for the composition of the invention to contain no multi-functional cross-linking material, provided film-forming copolymer which is cross-linkable by virtue of residual ethylenic unsaturation is present. Such a composition, which is also radiation-cross-linkable (presumably by virtue of the residual unsaturated double bonds alone in the copolymer), provides a coating which likewise has upgraded properties. However, at the present stage of development of this invention, alternative (b) of the invention is less preferred than embodiment (a). Nevertheless, alternative (b) could turn out to be particularly attractive in some applications in view of the absence of multi-functional cross-linking material (such materials are sometimes toxic or irritant); cross-linking by electron-beam irradiation would be especially useful in this alternative.

If an ultra-violet photoinitiator (or sensitizer), or a combination of such photoinitiators, is used in the invention, it will normally be well dispersed in the emulsified phase of the composition, and will yield free radicals on exposure to ultra-violet radiation energy; these activate the reactive double bonds of the multi-functional cross-linking material (if present as in alternative (a)) to effect cross-linking thereof either alone or, more usually, with the film-forming copolymer (assuming it is cross-linkable). In alternative (b), activation of the residual double bonds of the film-forming copolymer by the photoinitiator-derived free radicals presumably effects cross-linking. Examples of ultra-violet photoinitiators include halogenated polynuclear ketones such as chlorosulphonated benzanthones, chlorosulphonated fluorenones, alpha-haloalkylated benzanthones, alpha-haloalkylated fluorenones, and alkylphenones. In the examples we have used $\alpha,\alpha$-dimethoxy-$\alpha$-phenyl- acetophenone and $\alpha,\alpha$-dimethyl-$\alpha$-hydroxy-acetophenone as u.v. photoinitiators.

The amount of photoinitiator in the composition of the invention is normally within the range of 0 to 10% by weight, based on the dry weight of copolymer in the composition; the lower limit of zero is because its use is optional as described before. If used, however, it is normally present in an amount of 0.3 to 5%, preferably 0.5 to 3%, by weight on copolymer.

The admixture of the copolymer latex with the cross-linking material (if used) and (if used) photoinitiator may be effected in any suitable order or manner. For example, it is usual for the cross-linking material (if used) and (if used) photoinitiator to be stirred into the preformed copolymer latex, allowing sufficient time for the added cross-linking material to equilibrate in the composition (it will tend to swell the copolymer); this leads to a more homogeneous composition with better film-forming properties.

The compositions of the invention may if desired by treated with alkali or acid to achieved any desired pH therefor.

The film-forming copolymer is preferably a polymer comprising units derived from (in addition to those of the multi-functional comonomer discussed above) one or more monoethylenically unsaturated monomers of the film-forming type containing one or more (but more preferably one) olefinic, vinyl, or vinylidene groups, or groups containing acrylic or methacrylic double bonds.

The copolymers which may be used as the film-forming copolymer in the present invention include copolymers of one or more of the following:

vinyl chloride.

vinylidene chloride,

vinyl esters of alkanoic acids having from 1 to 18 carbon atoms in the alkyl group, especially vinyl acetate, alkyl acrylates and methacrylates having from 1 to 18 carbon atoms in the alkyl group.

vinyl ethers.

acrylamide and substituted acrylamides.

acrylonitrile, and methacrylonitrile.

monoethylenically unsaturated hydrocarbons, for example ethylene, isobutene, styrene and alpha-methyl styrene.

The copolymers must all, of course, include polymerised units derived from at least one multi-functional comonomer (as discussed above).

The copolymers may also (optionally but sometimes preferably) have an acid functionality, usually by virtue of containing polymerised units of a proportion of one or more aliphatic alpha-beta unsaturated carboxylic acids or ethylenically unsaturated phosphorous or sulphur-containing acids (such as a sulphonic acid like 2-acrylamide-2-methyl proprane sulphonic acid). The proportion of such acid(s) may be, for example, from 0.2 parts to 10 weight % based on the (dry) weight of the copolymer. Acids which may be used include acrylic, methacrylic, itaconic and citraconic acids.

The present invention is especially advantageous when the copolymer in the aqueous latex is a chlorine-containing copolymer (containing, e.g. at least 10%, or at least 20%, by weight of chlorine) such as a vinyl chloride or vinylidene chloride copolymer. Such copolymers, being based on chlorine-containing monomers, would be expected to give films which discolour (e.g. turn yellow) on exposure to ultra-violet radiation; surprisingly, however, as used in the invention such copolymers provide films from suitable formulations which do not yellow on exposure to dosages of radiation (such as ultra-violet radiation) required to effect substantially complete cross-linking. The copolymer may e.g. be a copolymer of vinyl chloride, vinylidene chloride, one or more alkyl acrylates or alkyl methacrylates having from 1 to 12 carbon atoms in the alkyl group, and at least one multi-functional comonomer (as defined); such polymers may optionally also contain polymerised units of one or more aliphatic alpha-beta unsaturated carboxylic acids. Examples of such copolymers, minus the inclusion of multi-functional comonomer, are those described generally and specifically in the specification of our UK Patent No 1 558 411 and our European Patent No 30080. The copolymer may advantageously also e.g. be an acrylic ester or methacrylic ester copolymer (i.e. copolymers mainly centred on acrylic or methacrylic esters as the film-forming comonomer(s)).

The addition copolymerisation to form the film-forming copolymer of the present invention may be carried out by well-established techniques, e.g. by emulsion copolymerisation in an aqueous medium with the aid of a free-radical-yielding initiator and usually in the presence of a surface-active agent, which will yield an aqueous latex of the copolymer. Emulsions of copolymers for use in the invention may also be formed by post-emulsification (in water) of pre-formed solid copolymers prepared by any suitable addition polymerisation technique, e.g. by free radical, anionic, or cationic addition polymerisation.

The composition of the invention may also include various other ingredients. For example, it may if desired include ingredients commonly employed in film-forming coating formulations, such as defoamers, rheology control agents, thickeners, dispersing and stabilizing agents (usually surfactants), wetting agents, extenders, fungicides, coalescing solvents, plasticisers, anti-freeze agents, and pigments, (although pigments are preferably omitted if u.v. radiation is to be used). The composition of the invention may also if desired contain one or more other types of polymer (i.e. polymer other than as defined above for the gel-containing addition copolymer or polymer which can arise from the self-polymerisation of the multi-functional cross-linking material) incorporated preformed into the composition, e.g. by adding an emulsion of such a polymer to the already-formed composition or, more preferably, by performing the polymerisation to form said gel-containing copolymer of the invention (as defined) in the presence of an emulsion of such a polymer. Preferably, such an other type of polymer (if used) is a condensation polymer; examples of such condensation polymers include polyurethanes, epoxy polymers and polyesters.

The compositions of the present invention may be used to coat a variety of substrates (often in the form of sheeting). Such substrates include wood, paper, cardboard, various forms of panelling such as plyboard, particleboard, plasterboard, various plastics materials, various minerals such as glass, asbestos, carbon fibre, concrete, plaster and ceramics, and in particular metals such as iron, steel and aluminium. The compositions may be applied by conventional techniques for the application of a coating to a substrate, for example by brush, spray, roller, or dipping. The compositions are particularly suitable for continuous coating operations.

The cross-linked films are normally formed from the compositions by application of the compositions to a substrate, removing the water phase (i.e. by natural drying, or by accelerated drying) (to form a film coating), and exposure of the resulting uncured film to radiation, often at ambient temperature and over a very short period of time. Such irradiation should not usually be applied until a properly coalesced film has been obtained from the composition, otherwise a non-coherent film may result.

The present invention is now illustrated by the following examples in which, unless otherwise specified, all

6

parts, percentages and ratios are on a weight basis. The prefix C before an example number denotes a comparative example.

The key to the monomer and other notation used in the examples is as follows:
VDC vinylidene chloride or polymerised units derived therefrom
VC vinyl chloride or polymerised units derived therefrom
EHA 2-ethylhexyl acrylate or polymerised units derived therefrom
MAA methacrylic acid or polymerised units derived therefrom
DAP diallyl phthalate or polymerised units derived therefrom
BA n-butyl acrylate or polymerised units derived therefrom
AA acrylic acid or polymerised units derived therefrom
BMA n-butyl methacrylate or polymerised units derived therefrom
MMA methyl methacrylate or polymerised units derived therefrom
AM allyl methacrylate or polymerised units derived therefrom
TMPTA trimethylol propane triacrylate
DMPA α,α-dimethoxy-α-phenyl-acetophenone
DMHA α,α-dimethyl-α-hydroxy-acetophenone

All the copolymers were prepared by essentially conventional emulsion polymerisation in an aqueous medium using a free-radical-yielding initiator and a surface active agent.

Examples Cl, 2, 3, 4

A composition not according to the invention (Example Cl) and compositions according to the invention (Examples 2, 3, 4) were prepared using aqueous latices of predominantly VDC/VC-based copolymers (made using aqueous emulsion addition polymerisations) having the following compositions:
Ex. Cl: VDC/VC/EHA/MAA/DAP 62.5/23.7/7.l/l.9/4.8
Ex. 2 : VDC/VC/EHA/MAA/DAP 66.6/l8.9/7.3/l.9/5.3
Ex. 3 : VDC/VC/EHA/MAA/DAP 70.5/l4.6/7.9/l.9/5.l
Ex. 4 : VDC/VC/EHA/MAA/DAP 65.5/20.9/6.5/l.9/5.l

The gel contents of the copolymers were determined by extraction using ethylene dichloride (see Table I).

In the preparation of the copolymer used for Example Cl, all the DAP used in the copolymerisation was added continuously in the conversion range 70-95% (giving 0% gel in the resulting copolymer); see following Table I. In the preparation of each of the copolymers used for Examples 2, 3 and 4, a certain proportion of the DAP used was continuously added in an early part of the polymerisation and the remainder added continuously in a late part of the polymerisation: the proportions of DAP used and the conversion ranges corresponding to the early and late parts of the polymerisation are shown for each case in Table I. All the copolymers were found to have equivalent levels of residual unsaturation (determined by Fourier Transformation Infra-Red Spectroscopy). An aqueous emulsion (50% solids) containing TMPTA (cross-linking material) and DMPA (photoinitiator) was added to each latex, so that each composition comprised:
TMPTA l5% (on copolymer weight)
DMPA l.5% (on copolymer weight)

Films were prepared from the compositions of Examples Cl, 2, 3 and 4 by spreading onto 6 × 4 inch glass plates using a draw-down applicator and drying at l00° C/3 minutes: the thickness of each dry film was about 30 microns. The films were exposed to ultra-violet radiation by passing the plates once at a rate of 60 ft min$^{-1}$ (using a conveyor belt) under a Primarc Minicure lamp (l.2 KW, 6 inch Hg lamp, 80 W/cm; cure energy provided equivalent to l94 mJ cm$^{-2}$). The gel contents of the copolymers in the irradiated compositions were about 70-75% showing that they had been substantially cured.

The resulting cured films were tested for solvent resistance, initial modulus and maximum stress; the results are shown in Table I. Solvent resistance for a film was assessed by rubbing the film with a rag soaked in methyl ethyl ketone (MEK) until the substrate was showing through, the result quoted being the number of double rubs to effect this.

Table 1

| Compn. used | DAP feed details for formation of copolymer used in compn. | | | | | % gel in copolymers | Properties of film made from composition after cure (measured at 20°C) | | |
| | EARLY part of copoln. | | LATE part of copoln. | | conversion gap between early and late DAP feeds (%) | | solvent resistance no. of MEK double rubs | Initial Modulus Ncm$^{-2}$ | Maximum Stress Ncm$^{-2}$ |
| | % of total DAP fed | conversion range of addition | % of total DAP fed | conversion range of addition | | | | | |
| Ex. C1 | 0 | – | 100 | 70-95% | – | 0 | 35 | 4500 | 746 |
| Ex. 2 | 11.2 | 0-70% | 88.8 | 70-95% | 0 | 25 | 80 | 38500 | 1450 |
| Ex. 3 | 7.7 | 0-30% | 92.3 | 70-95% | 40 | 53 | 100 | 42500 | 1650 |
| Ex. 4 | 7.7 | 0-30% | 92.3 | 70-90% | 40 | 60 | 250 | 60300 | 2100 |

It can be seen from Table I that the films made from the compositions of Examples 2, 3 and 4 (comprising copolymers according to the invention with gel fractions of 25, 53 and 60% respectively) had improved solvent resistance and improved mechanical properties in comparison to the film made from the copolymer of Example Cl (comprising a copolymer of very similar composition but with a zero gel fraction, and not according to the invention), all the compositions containing the same TMPTA and photoinitiator and being cured with the same amount of radiation energy under the same conditions of treatment. It can also be observed that the improvement in solvent resistance and mechanical properties improves with increasing gel content in the copolymer used for the composition (before curing).

The copolymerisaion to form the copolymer used for Example 2 was repeated 4 times; the % gel of the copolymers formed varied in the range l5 to 35%. The copolymerisation to form the copolymer for Example 4 was repeated 6 times; the % gel of the copolymers formed varied in the range 59-63%. This shows that copolymerisation using a distinct conversion gap between early and late addition of multi-functional comonomer (as in the copolymer for Example 4) is more reproducible than copolymerisation not employing a conversion gap (as in the copolymer for Example 2).

Examples C5, 6

A composition not according to the invention (Example C5) and a composition according to the invention (Example 6) were prepared using aqueous latices of predominantly acrylic-based copolymers having the folowing compositions:
Ex. C5: BA/MMA/AA 25.8/69.2/5.0
Ex. 6 : BA/MMA/AA/AM 20.8/69.2/5.0/5.0

The copolymer used for Example C5 had 0% gel (no difunctional comonomer being used). In the preparation of the copolymer used for Example 6, polymerisation was continued to about 95% conversion with AM being fed continuously throughout to the polymerisation medium, 7% of the total AM used being added over the first 70% of the total monomer feed profile (to provide gel) and the remaining 93% over the remainder of the feed profile to provide residual unsaturation. The % gel of the polymer was estimated to be approximately 80% (extraction using tetrahydrofuran; a highly accurate measurement was not possible as the uncrosslinked fraction of the coplymer was found to be somewhat difficult to dissolve in solvents). The copolymer latices were formulated with TMPTA (cross-linking agent) and DMHA (photoinitiator) and also ethylene glycol (coalescing agent, required because of the high polymer glass transition temperatures of $>50°$ C of these copolymers; 5% in Example C5 and l3% in Example 6 - based on copolymer weight), so that each composition comprised
TMPTA l0% (on copolymer weight)
DMHA 5% (on copolymer weight)

Films were cast from the compositions of Examples C5 and 6 (about 80 microns wet) and dried (5 minutes flash off at 80° C). The films were exposed to ultra-violet radiation by passing once at a rate of 20 ft min$^{-1}$ under two Primarc Minicure lamps (each l.2 Kw, 6 inch Hg lamp, 8W/cm). The gel content of the copolymer of Example 6 after irradiation was found to be increased (although it could not be measured accurately). The resulting films (after u.v. exposure) were tested for solvent resistance (method as for Examples l to 4), the results being as follows:

## Table 2

| Composition used | % Gel in copolymer before irradiation | Solvent Resistance of irradiated films (no. of MEK double rubs) |
|---|---|---|
| Ex. C5 | 0 | 81 |
| Ex. 6 | approx. 80% | $\gg$200 |

These examples show that the present invention may be usefully applied to predominantly acrylic-based copolymer compositions (these being ab initio inherently more solvent-resistant that the predominntly VDC/VCM-base copolymer compositions of Examples l to 4).

Examples C7, 8

These compositions were not dissimilar to Examples C6, 7, one difference however being that the emulsion copolymerisations to form the predominantly acrylic-based copolymers were performed in the presence of an aqueous emulsion of a pre-formed polyurethane seed polymer containing 6% of adsorbed BA monomer, the resulting acrylic copolymers used in Examples C7 and 8 having the following compositions:
Ex. C7: MMA/BMA/BA/MAA 54.8/l7.2/23.0/5.0
Ex. 8 : MMA/BMA /BA/MAA/AM 49.8/l7.2/23.0/5.0/5.0

0 232 016

The ratio of acrylic material/urethane material in each case was 80/20. When making the copolymer of Ex. 8, the AM was fed as in Examples C5. 6 except that 10% of the total used was fed over the first 70% of the monomer feed and the remaining 90% over the remainder of the feed. The composition were formulated for u.v irradiation as in Examples C5. 6 except that butyl glycol (10%) was used instead of ethylene glycol (as coalescing agent) and that triethoxylated TMPTA was used instead of TMPTA. The resulting films (after u.v. exposure) were tested for solvent resistance as in Examples C6,7. the results being as follows:

## Table 3

| Composition used | % Gel in copolymer before irradiation | Solvent resistance of irradiated films (no. of MEK double rubs) |
|---|---|---|
| Ex. C7 | 0 | 80 |
| Ex. 8 | approx. 80% | ≫ 200 |

These results demonstrate that the advance of the present invention is maintained when a preformed polymer is present during the emulsion polymerisation to form the gel-containing copolymer.

**Claims**

1. An aqueous-based, film-forming, radiation cross-linkable coating composition comprising an aqueous latex of at least one film-forming copolymer formed by addition polymerisation wherein said film-forming copolymer has a gel fraction of at least 1% by weight which has been formed from the monomer system used to prepare said film-forming copolymer as a result of the inclusion therein of at least one multi-functional comonomer which has been added to the polymerisation reaction in at least an early part thereof, and wherein said composition either
    (a) includes at least one multi-functional cross-linking material, or
    (b) excludes any multi-functional cross-linking material provided it is a composition in which at least one of said at least one film-forming addition copolymer is cross-linkable (having residual carbon-carbon double bond unsaturation therein) as a result of said monomer system including at least one lower reactivity multi-functional comonomer (as defined herein) which has been added to the polymerisation reaction in at least a late part thereof.

2. A composition according to Claim 1 wherein said monomer system used to prepare said film-forming copolymer includes at least one lower reactivity multi-functional comonomer (as defined herein).

3. A composition according to either Claim 1 or Claim 2 wherein said monomer system includes at least one higher reactivity multi-functional comonomer (as defined herein).

4. A composition according to any one of the preceding claims wherein in alternative (a) at least one of said at least one film-forming addition copolymer in said composition is cross-linkable (having residual carbon-carbon double bond unsaturation therein) as a result of said monomer system including at least one lower reactivity multi-functional comonomer (as defined herein) which has been added to the polymerisation reaction in at least a late part thereof.

5. A composition according to any one of the preceding claims wherein the gel fraction of said film-forming addition copolymer is 1 to 99% by weight.

6. A composition according to any of the preceding claims wherein multi-functional comonomer is added in at least an early part of the polymerisation which early part is within the first 70% conversion reached in the copolymerisation.

7. A composition according to any one of the preceding claims wherein the amount of multi-functional comonomer added in the early part of the polymerisation is at least 5 weight % of the total amount of multi-functional comonomer used in the copolymerisation.

8. A composition according to Claim 7 wherein said amount is 5 to 50 weight %.

9.. A composition according to any one of the preceding claims wherein lower reactivity multi-functional comonomer is added within at least a late part of the polymerisation which late part is after 70 % conversion in the copolymerisation has been reached.

10. A composition according to Claim 9 wherein said late part is within 70 to 95 % of the total % conversion reached in the copolymerisation.

11. A composition according to any one of the preceding claims wherein at least one multi-functional comonomer (which can be a higher or lower reactivity multi-functional comonomer) is added in an early part of the copolymerisation and at least one lower reactivity multi-functional comonomer in a late part of the copolymeriation, and wherein there is a gap between said early and late parts of the polymerisation in which no multi-functional comonomer is added.

12. A composition according to claim II wherein said gap corresponds to an amount of conversion of at least 5 %.

13. A composition according to any one of Claims 9 to I2 wherein the amount of lower reactivity multi-functional comonomer which is added in the late part of the polymerisation is at least 20 weight % of the total amount of lower reactivity multi-functional comonomer used in the copolymerisation.

14. A composition according to Claim I3 whereas said amount is at least 50 weight %.

15. A composition according to any one of the preceding claims wherein said copolymer comprises units of at least one multi-functional comonomer which is a low reactivity comonomer containing one or more allyl groups $CH_2 = CHCH_2$- or monosubstituted (as defined) derivatives thereof.

16. A composition according to any one of the preceding claims wherein said film-forming copolymer comprises I to 20 weight % of units of multi-functional comonomer.

17. A composition according to any one of the preceding claims which (in alternative (a)) contains up to 35 weight % (dry) of said at least one multi-functional cross-linking material.

18. A composition according to any one of the preceding claims which comprises at least one ultra-violet photoinitiator (sensitizer).

19. A composition according to any one of the preceding claims wherein the film-forming copolymer comprises at least one ethylenically unsaturated monomer of the film-forming type containing at least one group selected from olefinic, vinyl, and vinylidene groups, and groups containing acrylic or methacrylic double bonds and diene double bonds.

20. A composition according to Claim I9 wherein said at least one film-forming copolymer is a copolymer comprising (in addition to multi-functional comonomer) one or more of the following:
vinyl chloride,
vinylidene chloride,
vinyl esters of alkanoic acids having from I to I8 carbon atoms in the alkyl group, alkyl acrylates and methacrylates having from I to I8 carbon atoms in the alkyl group,
vinyl ethers, acrylamide and substituted acrylamides, acrylonitrile, and methacrylonitrile,
monoethylenically unsaturated hydrocarbons.

21. A composition according to any one of the preceding claims wherein said film-forming copolymer comprises units of at least one aliphatic alpha,beta-unsaturated carboxylic acid.

22. A composition according to any one of the preceding claims wherein said at least one film-forming copolymer is a copolymer containing at least I0 weight % of chlorine.

23. A composition according to any one of the preceding claims wherein said film-forming copolymer is a copolymer comprising units of vinyl chloride, vinylidene chloride, one or more alkyl acrylates or alkyl methacrylates having from I to I2 carbon atoms in the alkyl group, at least one multi-functional comonomer and optionally at least one aliphatic alpha-beta unsaturated carboxylic acid.

24. A composition according to any one of the preceding claims wherein said composition includes at least one other polymer, not being a gel-containing addition copolymer as defined herein or a polymer which can arise from the self-polymerisation of said multi-functional cross-linking material, incorporated preformed into the composition.

25. A composition according to Claim 24 wherein said at least one other polymer is a condensation polymer.

26. A composition according to Claim 25 wherein said at least one other polymer is selected from polyurethanes, epoxy polymers and polyesters.

27. A composition according to any one of Claims 24 to 26 wherein said at least one other polymer has been incorporated into the composition by polymerisation to form said at least one gel-containing copolymer in the presence of an aqueous emulsion of said at least one other polymer.

28. Process for the preparation of an aqueous-based film-forming radiation-cross-linkable coating composition according to any one of Claims I to 27 which process comprises:

I) forming an aqueous latex of at least one film-forming copolymer made by polymerisation using a monomer system which yields a film-forming copolymer and includes at least one multi-functional comonomer which is added to the polymerisation reaction in at least an early part thereof thereby providing in the resulting copolymer a gel fraction having a proportion by weight of the copolymer as defined herein; and

2) admixing said aqueous latex with at least one multi-functional cross-linking material this admixture being optional if said film-forming copolymer is cross-linkable.

29. Process according to Claim 28 wherein said at least one film-forming copolymer is cross-linkable by virtue of including therein polymerised units of at least one lower reactivity multi-functional comonomer which comonomer has been added in at least a late part of the polymerisation reaction.

30. Process according to either Claim 28 or Claim 29 wherein at least one photoinitiator is admixed with said aqueous latex in step 2).

31. Process according to any one of Claims 28 to 30 wherein at least one other polymer is incorporated preformed into said composition, not being a gel-containing addition copolymer as defined herein or a polymer which can arise from the self-polymerisation of said multi-functional cross-linking material.

32. Process according to Claim 3l wherein incorporation is effected by performing the polymerisation to form said at least one film-forming copolymer in the presence of an aqueous emulsion of said at least one other polymer.

33. Cross-linked film formed from a composition according to any one of Claims l to 27.

34. Cross-linked film according to Claim 33 wherein cross-linking has been effected by the application of ultra-violet radiation.

35. Cross-linked film according to Claim 33 wherein cross-linking has been effected by the application of electron beam radiation.

36. A coated substrate having a coated film derived from a composition according to any one of Claims l to 27.